Europäisches Patentamt

European Patent Office

Office européen des brevets

(19)

(11) Publication number: 0 351 934
A1

(12) # EUROPEAN PATENT APPLICATION

(21) Application number: 89303640.0

(22) Date of filing: 12.04.89

(51) Int. Cl.⁴: G01S 7/28 , G01S 13/72 , G01S 13/42

The title of the invention has been amended (Guidelines for Examination in the EPO, A-III, 7.3).

(30) Priority: 23.04.88 GB 8809630

(43) Date of publication of application:
24.01.90 Bulletin 90/04

(84) Designated Contracting States:
DE ES FR IT NL

(71) Applicant: PLESSEY OVERSEAS LIMITED
Vicarage Lane
Ilford Essex IG1 4AQ(GB)

Applicant: The Secretary of State for Defence
in Her Britannic Majesty's Government of the
United Kingdom of Great Britain and
Northern Ireland Whitehall
London S.W.1.(GB)

(72) Inventor: Billam, Eugene Raymond
16 Wellsworth Lane
Rowlands Castle Hants, PO9 6BY(GB)
Inventor: Salter, David Malcolm
11 Burnham Beechs Chandlers Ford
Eastleigh Hants, SO5 3QS(GB)

(74) Representative: Elliott, Frank Edward
The Plessey Company plc. Intellectual
Property Department Vicarage Lane
Ilford, Essex IG1 4AQ(GB)

(54) Radar system using electronically steerable active transmit-receive modules.

(57) A radar system having a plurality of electronically steerable radar beam transmit/receive modules arranged to transmit and receive radar signals both to survey a broad range of direction bearings regularly to identify targets and to track said detected targets more regularly under the control of a control element, wherein operation a time frame is defined and within said time frame a multitude of timeslots are established, each timeslot being assigned such that during that timeslot the transmit/receive modules are directed to surveying the direction bearings or tracking a respective detected target, the assignment of timeslots being determined by the number of targets detected.

Fig. 2.

## RADAR SYSTEMS

The present invention relates to radar systems and more particularly to such systems using electronically steerable active transmit-receive modules.

Increasingly there is a demand that radar systems become more sensitive to fast moving small targets while remaining or becoming less susceptible to jamming.

Typically, a modern radar system will use electronically steered fixed arrays, each array comprises many active transmit-receive modules. These active transmit-receive modules are formed into respective array face forms for one or more beams, in transmit and receive modes, the steering of these beams being achieved using phase shifters in each module. It is possible that one of the beams may be a monopulse difference pattern for accurate target direction indication.

Radar systems, especially those of long range, tend to detect a multitude of targets. The threat associated with each target will vary dependent upon range and target type. Consequently, it would be advantageous to be able to vary the scan time on a particular target bearing in order that information about that target can be more rapidly updated. A system with a surveillance mode during which targets are identified and placed upon a target list would allow such rapid updating.

It is part of the physical definition of a radar system that it has a main beam detection lobe and a plurality of side lobes. A method of jamming a radar system that may be employed by an enemy is to transmit a powerful return signal in to the side lobe detection areas. As a result it is prudent to identify such jamming and steer a null or detection "dead-zone" between lobes into the bearing of the jammer consequently reducing the sensitivity of the radar system to such jamming.

The radar system will receive clutter signals resulting from land and sea echoes along with "clutter" produced by passive radar counter-measures such as chaff. To distinguish the target from such clutter requires a longer dwell time at the target bearing. There is thus an antagonistic effect between a requirement for rapid searching and sufficient target dwell time to allow identification.

It is an objective of the present invention to provide a radar system that is adaptable whereby the problems described above can be reduced and the performance of the radar system improved.

An objective of the present invention is to provide a radar system where the problems and aims described are substantially achieved.

According to the present invention there is provided a radar system having a plurality of electronically steerable radar beam transmit/receive modules arranged both to survey a broad range of direction bearings regularly to identify targets and to trace said detected targets more regularly under the control of a control element, where, in operation, a time frame is defined and within said time frame a multitude of timeslots are established, each timeslot being assigned such that during each timeslot the transmit/receive elements are directed to survey the direction bearing or tracking of a respective detected target, the assignment of timeslots being determined by the number of targets detected.

An embodiment of the present invention will now be described by way of example only with reference to the accompanying drawings wherein:-

Figure 1 illustrates a power density plot of a radar beam along a particular beam direction bearing showing the main beam and side lobes; and

Figure 2 illustrates, in funotional block diagram form, a radar system according to the present invention.

Radar systems previously have been arranged to give a number of fixed options of scanned period to give pre-defined scenarioes upon installation, having various parameters such as scan period etc. adjusted to a worst case scenario. This does not allow the system to be adapted to maximise performance and resistance to interference. A radar beam can be cluttered by rain or other atmospheric conditions or jammed by an enemy transmitter. Once these factors have been detected, it is possible to reduce their effect by altering various system parameters. However, due to the unadaptablility of known radar systems, it is often impossible to achieve such variations.

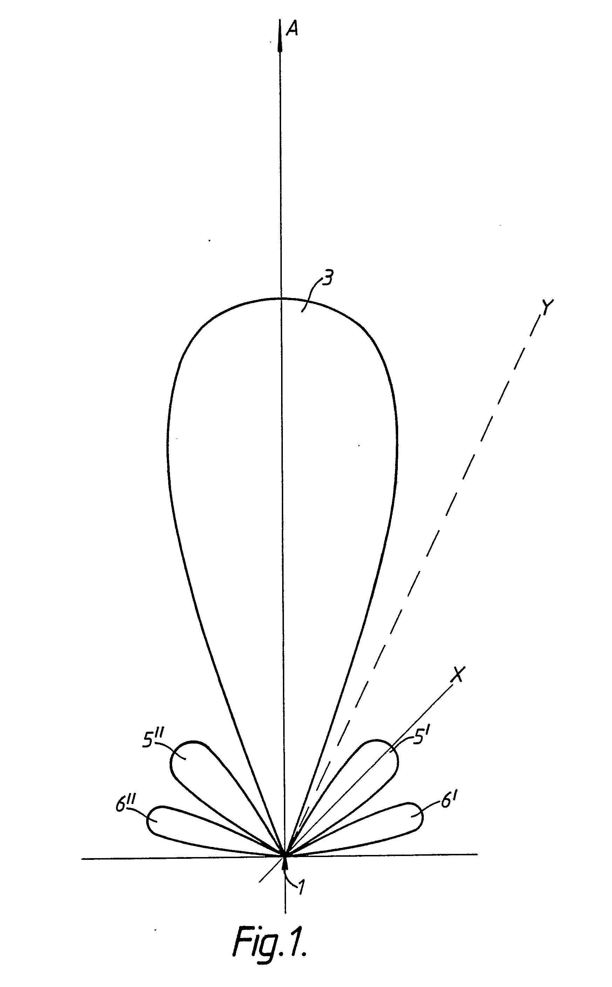

Figure 1 illustrates a detector 1 sensitivity about the direction bearing A having a main lobe 3 and side lobes ($5'$, $5''$ and $6'$, $6''$). As can be seen, the side lobes ($5'$, $5''$ and $6'$, $6''$) give the detector sensitivity along bearing (X) other than that being scanned i.e. A, that of the main lobe 3. An enemy jammer consequently would position itself such that a transmitted jamming signal would be incident upon bearing X whereby the noise level is increased thus obscuring the main lob detected signal and so jamming the radar system.

A method of limiting the effect of a jammer is to steer the beam baring such that a detection null between the main lobe and side lob or side lobe/side lobe is arranged to be aligned with the jammer bearing thus significantly reducing its effect. However, a more favourable method of null steering is to actually alter the side lobe pattern by changing weight coefficients in the phased array.

By changing the side lobe pattern a null can be steered to the jammer baring while the main lobe maintains its bearing. The effect of a number of jammers can thus be relieved by altering the side lobe pattern.

The present invention provides a system of radar beam management wherein the following features are provided:-

(i) Dependent upon the number of targets i.e. target density detected, the beam direction and scan period (or interval between looks) can be altered;

(ii) the dwell time (or duration of look) of the radar beam at a direction bearing, and the shape of the transmitted waveform may be altered to enhance the target signal against its clutter environment (the actual type of signal may also be changed); and,

(iii) the beam pattern (main lobe and associated side lobes) may be shaped in order that a null is directed to the jammer.

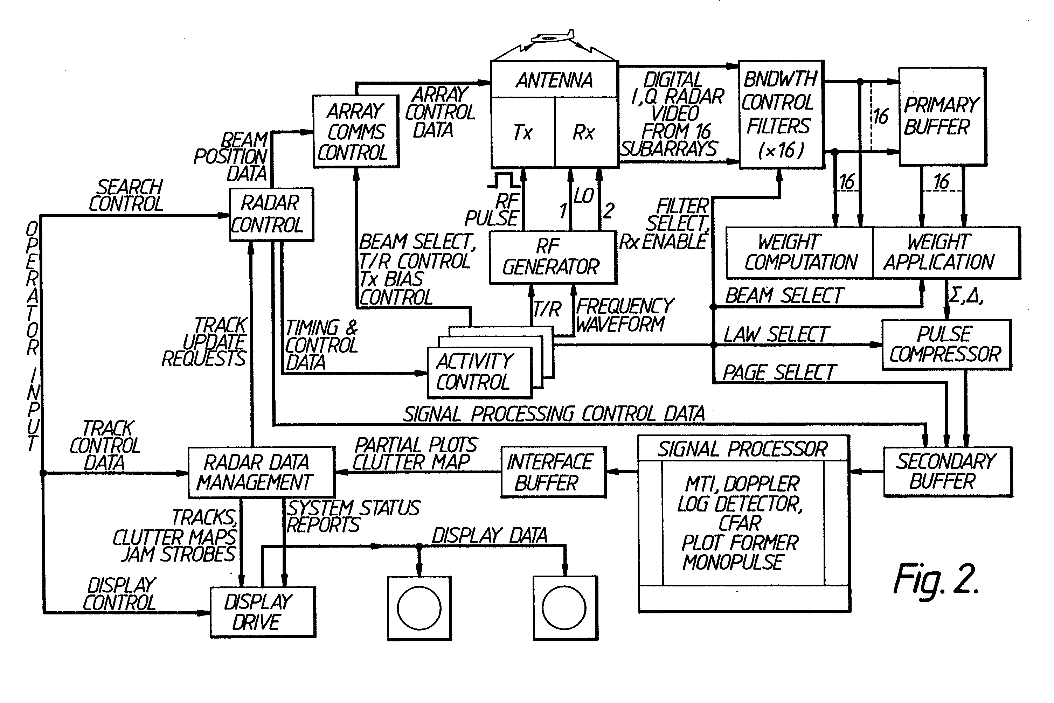

Consider Figure 2 illustrating, in functional block diagram form, a radar system according to the present invention. An antenna 21 is controlled by a radar control 23. The control 23 administers the beam steering and waveform selection of the radar system to provide search or surveillence mode and target tracking mode. Each task is given a priority and, according to its assigned job priority, is given a time slot in a scan time frame in which that task is performed. The control 23 generates details of the required beam direction and waveform, its timing and other processing requirements. Surveillance or search tasks are given the lowest job priority. However, it is during this period that targets are first detected. Typically, search scans will be conducted approximately every 10s. However, once detected, a target will be looked at every second.

In the present invention, these allocated periods of each time frame are variable in order to give a variation in the dwell time at each bearing such that effective filtering in the detected beam is not lost by changes in climatic conditions.

The activity control 25 accepts task information from the radar control 23 and provides real time control signals. Radar beam directing or pointing data is passed from the radar control 23 to the array communication system 27. Real time command signals are accepted by the activity control unit 25.

The antenna is an active phased array partially or fully filled with solid-state transmit - receive (Tx/Rx) modules. These modules accept beam pointing information and other items of array control data, each module setting up its own internal functions (phase shifter setting, Tx bias, Tx/Rx switches etc.). Once set up, an RF Generator is activated to produce the required transmitter waveform which is fed into the Tx/Rx module for amplification. In receive mode, the signals from the modules are passed in groups through stripline combiners to provide sub-array channel signals.

These sub-array signals are mixed down to baseband before analogue/digital conversion. Bandwidth control filters 29 ensure the instantaneous bandwidth of the system is matched to the selected pulse waveform before the signal is resampled to provide the necessary data rate for pulse compression.

A weight computation unit 31, a weight application unit 33 and primary buffer 35 are employed in final beam-formation.

Outputs from the receiver channels are sampled through each pulse burst, the samples being directed to the weight computation unit 31.

The return signals from the radar for complete pulse bursts are held in the primary buffer 35 until appropriate weighting or scaling factors to be applied to the output Rx values are calculated. These calculated weighting factors are then retrospectively applied.

The weight computation unit 31 is capable of producing weighting factors appropriate to sum, difference and side lobe blanking beam patterns and of steering up to 15 independent nulls against jammer locations.

The weight application unit 33 applies previously calculated weighting factors to the radar signals from the primary buffer store. The weighted radar signals are summed to form a single beam.

A secondary buffer store 37 receives data, from a digital pulse compressor 39 relating to one burst of radar pulses and assembles several activities into a radar task (a complete beam dwell).

A signal processor 41 provides normal radar, moving target indication, constant false alarm rate (CFAR), thresholding, mono-pulse angle extraction and integration functions.

Target detections (partial plots thereof) together with range and off-boresight information are passed from the signal processor 41 to the radar control system.

The data provided by the signal processor 41 is directed to a radar data management element 43. The radar data management function can be sub-divided into three areas: plot processing, stationary plot filtering and formation/control of target tracks.

The partial plots of target detections from the signal processor 41 are accessed via an interface buffer store 45 through a plot processing function. The partial plots are consolidated into single respective target plots. Stationary plot filtering is implemented to provide a simple target tracker for slow moving surface targets so that plots resulting from these targets (and clutter) are not passed to the main target tracker. Those which fail to associate and plots resulting from track tasks are passed to the tracker which attempts to associate those plots with established known target plots. This process avoids redetection of old targets and multiple detections on new targets.

Target tracking is achieved with a Kalman Filter technique which has the ability to cope with a variable data rate on individual targets. A minimum track data rate for each target is computed and passed to the radar control function as a track update request.

The radar data management unit 43 directs data to the display drive 49 which in turn drives displays 51 and 53.

It will be appreciated that, by defining a time frame for the arrangement described above, each timeslot in the time frame may be attributed either to transmit or receive mode and, within either of these modes, a multitude of tasks can be designated. The radar system of the present invention can thus be adapted in order to maximise the efficiency of the system with any given operational parameters. Consequently, operationally dynamic parameters such as target density, environmental clutter and enemy jamming may be accomodated as compared to the previous situation where the system was continued to a set of fixed operating options or scenarios.

It will be appreciated that, as the present radar system has the operational time divided into timeslots, then various filtering and sorting operations can be conducted such as dismissal of false alarms and radio frequency illumination of targets to be engaged. The amount of time spent with each function will depend upon the number of targets detected. In order to further maximise the potential of the radar system, different surveillance data rates can be used in designated volumes of coverage e.g. near the sea's surface, compared to higher elevation.

The beam forming is adaptive in order that nulls of the beam can be directed to sources of jamming.

Typically, the radar system transmits different waveforms in the direction of various cluttered areas, and in special coverage e.g. sea's surface. Selection of waveforms and beam dwell time is adaptive to the changing environment.

**Claims**

1. A radar system having a plurality of electronically steerable radar beam transmit/receive modules arranged to transmit and receive radar signals both to survey a broad range of direction bearings regularly to identify targets and to track said detected targets more regularly under the control of a control element, wherein operation a time frame is defined and within said time frame a multitude of timeslots are established, each timeslot being assigned such that during that timeslot the transmit/receive modules are directed to surveying the direction bearings or tracking a respective detected target, the assignment of timeslots being determined by the number of targets detected.

2. A radar system as claimed in Claim 1 wherein the control element includes jamming clutter determining means arranged to determine, in operation, the level of radar beam clutter and thereupon to adjust the number of timeslots allocated to surveying and target tracking consequently altering the system dwell time at any particular direction bearing.

3. A radar system as claimed in Claim 1 or 2 wherein the control element includes jamming signal determining means to determine, in operation, whether a jamming signal is being received at a direction bearing and, when such is determined, to shape the receive radar signal pattern whereby a detection null is presented at that direction bearing.

4. A radar system as claimed in claim 3 wherein the jamming signal determining means is further arranged to be able to detect. more than one jamming signal and to shape the received radar beam pattern such that a detection null is presented at the direction bearing of each jamming signal.

5. A radar system as claimed in any preceding claim wherein the control element includes environmental clutter determining means arranged to determine variations in the environmental clutter in receive radar signals from direction bearings, and dependent thereon calculates a weighting factor and selects a pre-determined pulse pattern, the output detected signal being adjusted according to the weighting factor.

6. A radar system as claimed in any preceding claim wherein a proportion of the timeslots in each timeframe are assigned to radio frequency target illumination.

7. A radar system having a plurality of electronically steerable radar beam transmit/receive modules arranged to transmit and receive radar signals both to survey a broad range of direction bearings regularly to identify targets and to track said detected targets more regularly under control of a control element, where, in operation, a time frame is defined and within said time frame a multitude of timeslots are established, each timeslot being assigned such during that each timeslot the transmit/receive modules are directed to surveying the direction bearings or tracking a respective detected target, the number and assignment of timeslots to either tracking or surveying being arranged to be determined by the number of targets detected, and the dwell time necessary to distinguish targets from clutter.

*Fig.1.*

Fig. 2.

ANTENNA
Tx | Rx

ARRAY COMMS CONTROL

RADAR CONTROL

BNDWTH CONTROL FILTERS (×16)

PRIMARY BUFFER

16

RF GENERATOR

WEIGHT COMPUTATION

WEIGHT APPLICATION

PULSE COMPRESSOR

ACTIVITY CONTROL

RADAR DATA MANAGEMENT

INTERFACE BUFFER

SIGNAL PROCESSOR
MTI, DOPPLER LOG DETECTOR, CFAR PLOT FORMER MONOPULSE

SECONDARY BUFFER

DISPLAY DRIVE

ARRAY CONTROL DATA

DIGITAL I, Q RADAR VIDEO FROM 16 SUBARRAYS

BEAM POSITION DATA

SEARCH CONTROL

RF PULSE

1  LO  2

FILTER SELECT, Rx ENABLE

BEAM SELECT, T/R CONTROL Tx BIAS CONTROL

T/R  FREQUENCY WAVEFORM

BEAM SELECT

LAW SELECT

PAGE SELECT

Σ, Δ,

TRACK UPDATE REQUESTS

TIMING & CONTROL DATA

SIGNAL PROCESSING CONTROL DATA

TRACK CONTROL DATA

PARTIAL PLOTS CLUTTER MAP

TRACKS, CLUTTER MAPS JAM STROBES

SYSTEM STATUS REPORTS

DISPLAY DATA

DISPLAY CONTROL

OPERATOR INPUT

16

16

EP 0 351 934 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 593 286 (B.D. MATHEWS et al.) * Column 1, line 61 - column 2, line 63; column 6, line 14 - column 8, line 41; figures 1,2 * | 1,6,7 | G 01 S 7/28 G 01 S 13/72 G 01 S 13/42 |
| Y | | 2-5 | |
| | --- | | |
| Y | INTERNATIONAL CONFERENCE RADAR 87, 19th - 21st October 1987, publication no. 281, pages 32-36, IEE, London, GB; C.R.G. THOMPSON: "A modular approach to multi-function radar design for naval application" * Whole document * | 2,5 | |
| | --- | | |
| Y | INTERNATIONAL CONFERENCE RADAR 87, 19th - 21st October 1987, publication no. 281, pages 453-457, IEE, London, GB; R. LAPPAGE et al.: "The byson research radar" * Page 454, paragraph: "Sidelobe cancellation"; figures 1,8 * | 3,4 | TECHNICAL FIELDS SEARCHED (Int. Cl.4) |
| | --- | | |
| A | IEEE 1980 INTERNATIONAL RADAR CONFERENCE, Arlington, Virginia, 28th - 30th April 1980, pages 8-13, IEEE, New York, US; W. FLESKES et al.: "Adaptive control and tracking with the elra phased array radar experimental system" * Whole article * --- -/- | 1,7 | G 01 S |

The present search report has been drawn up for all claims

| Place of search | Date of completion of the search | Examiner |
|---|---|---|
| THE HAGUE | 12-07-1989 | VAN WEEL E.J.G. |

European Patent
Office

**EUROPEAN SEARCH REPORT**

Application Number

EP  89 30 3640

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PROCEEDINGS OF THE 1988 IEEE NATIONAL RADAR CONFERENCE, Ann Arbor, Michigan, 20th - 21st April 1988, pages 157-164, IEEE, New York, US; V.C. VANNICOLA et al.: "Applications of knowledge based systems to surveillance" * Whole article * | 1,7 | |
| A | INTERNATIONAL CONFERENCE RADAR 87, 19th - 21st October 1987, publication no. 281, pages 37-40, IEE, London, GB; E.R. BILLAM et al.: "Mesar - an advanced experimental phased array radar" * Whole article * | 1,7 | |
| A | DE-A-3 619 369  (WESTINGHOUSE) * Abstract; figures 1,2 * | 1,7 | |
| A | EP-A-0 142 293  (NEC) * Abstract; figure 2 * | 5 | |

TECHNICAL FIELDS
SEARCHED (Int. Cl.4)

The present search report has been drawn up for all claims

| Place of search | Date of completion of the search | Examiner |
|---|---|---|
| THE HAGUE | 12-07-1989 | VAN WEEL E.J.G. |

EPO FORM 1503 03.82 (P0401)